(19) Europäisches Patentamt
European Patent Office
Office européen des brevets

(11) EP 2 677 745 A1

(12) EUROPEAN PATENT APPLICATION

(43) Date of publication:
25.12.2013 Bulletin 2013/52

(51) Int Cl.:
H04N 7/26 (2006.01)

(21) Application number: 13002133.0

(22) Date of filing: 23.04.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 21.06.2012 CN 201210211067

(71) Applicant: MediaTek Inc.
Hsin-Chu (TW)

(72) Inventors:
• Yang, Chin-Jung
  Hsinchu City (TW)
• Yan, Qianqian
  Gaoxin District
  Hefei City, Anhui Province (CN)

(74) Representative: Hoefer & Partner
Pilgersheimer Straße 20
81543 München (DE)

(54) **Method and apparatus for buffering read-only images and/or readable and writable images into buffer device**

(57) An exemplary method for buffering an image into a buffer device (106) includes following steps: checking a predetermined criterion; when the predetermined criterion is not met, converting at least a first image in the buffer device (106) into at least a corresponding second image in the buffer device (106), wherein a size of the corresponding second image is smaller than a size of the first image; and when the predetermined criterion is met, storing a third image derived from the image into the buffer device (106).

FIG. 2

**Description**

The present invention relates to a method for buffering read-only images and/or readable and writable images into a buffer device and related buffer controller thereof according to the pre-characterizing clauses of claims 1 and 2.

Blu-ray disc Java (BD-J) is a specification supporting advanced contents on a Blu-ray disc. Specifically, BD-J refers to an application programming environment that support BD systems, and allows content providers to deliver highly-interactive, highly-programmable titles to end users. For example, BD-J may allow bonus content on a BD title to be far more sophisticated than bonus content provided by a standard digital versatile disc (DVD), including network access, picture-in-picture and access to a local storage device. Regarding an electronic device with stereoscopic BD-J capability, the maximum memory capacity allocated for buffering image data and audio data is 123MB for BD-3D disc and 61.5MB for normal BD disc, where the maximum memory allocated for buffering the audio data is 6.5MB. The cost of the memory may be high for certain applications (e.g., a BD player or a feature phone). Thus, there is a need for an innovative buffer management design which can reduce the buffer size for cost reduction without image quality degradation or with negligible impact on the image quality.

This in mind, the present invention aims at providing a method for selectively enabling compression upon images stored in a buffer device and related buffer controller thereof to thereby reduce the buffer size as well as the production cost.

This is achieved by a method and buffer controller according to claims 1 and 2. The dependent claims pertain to corresponding further developments and improvements.

As will be seen more clearly from the detailed description following below, the claimed method for buffering an image into a buffer device includes: checking a predetermined criterion; when the predetermined criterion is not met, converting at least a first image in the buffer device into at least a corresponding second image in the buffer device, wherein a size of the corresponding second image is smaller than a size of the first image; and when the predetermined criterion is met, storing a third image derived from the image into the buffer device.

Besides, the claimed buffer controller for buffering an image into a buffer device includes a checking unit and a control unit. The checking unit is arranged for checking a predetermined criterion. The control unit is arranged for converting at least a first image in the buffer device into at least a corresponding second image in the buffer device when the checking unit determines that the predetermined criterion is not met, and storing a third image derived from the image into the buffer device when the checking unit determines that the predetermined criterion is met, wherein a size of the corresponding second image is smaller than a size of the first image.

In the following, the invention is further illustrated by way of example, taking reference to the accompanying drawings. Thereof

FIG. 1 is a block diagram illustrating an electronic device according to an exemplary embodiment of the present invention,
FIG. 2 is a flowchart illustrating a method for buffering an RW image into a buffer device according to an embodiment of the present invention,
FIG. 3 is a flowchart illustrating a method for buffering an RO image into a buffer device according to a first embodiment of the present invention,
FIG. 4 is a flowchart illustrating a first example of step 320 shown in FIG. 3,
FIG. 5 is a flowchart illustrating a second example of step 320 shown in FIG. 3, and
FIG. 6 is a flowchart illustrating a method for buffering an RO image into a buffer device according to a second embodiment of the present invention.

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is electrically connected to another device, that connection may be through a direct electrical connection, or through an indirect electrical connection via other devices and connections.

In accordance with the BD-J specification, for BD-3D disc, a buffer device with a buffer size not larger than 123MB (for normal BD disc, it is 61.5MB) is allowed to be used. Based on the usage of image data stored in the buffer device (e.g., a memory device), images may be categorized into readable and writable images (called RW images hereinafter) and read-only images (called RO images hereinafter), where the storage space which buffers the RW images may regarded as a temporary buffer, and the storage space which buffers the RO images may regarded as a cache memory. One target of the present invention is to use a buffer device with a buffer size equal to Y MB (Y<123), where the buffer size satisfies the following equation.

$$(123-6.5-X)x\alpha+6.5+X=Y \qquad (1)$$

In above equation, X represents the size of uncompressed RW images stored in the buffer device, 6.5 represents the size of audio data stored in the buffer device, $\alpha$ represents a lossy compression ratio (%), and $(123-6.5-X)x\alpha$ represents the size of compressed images, including compressed RO images and/or compressed RW images stored in the buffer device. Specifically, as a compression scheme may be enabled during the buffering procedure of RO images and RW images, using a smaller buffer device for buffering the image data and audio data is feasible. Besides, the present invention further controls enabling of a proper compression scheme to thereby make the image quality have no degradation or negligible degradation. Further details of the present invention are described as below.

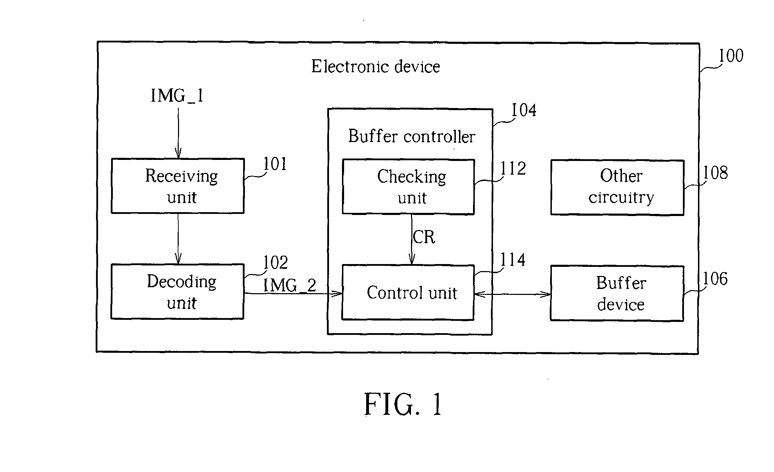

FIG. 1 is a block diagram illustrating an electronic device according to an exemplary embodiment of the present invention. The electronic device 100 may be any device supporting the BD-J specification. By way of example, but not limitation, the electronic device 100 may be a BD player or a feature phone. As shown in FIG. 1, the electronic device 100 includes a receiving unit 101, a decoding unit 102, a buffer controller 104, a buffer device 106, and other circuitry 108. The receiving unit 101 may receive encoded images (e.g., JPG/PNG/GIF images) IMG_1 from an image source (e.g., a Blu-ray disc or Internet). The encoded images IMG_1 are decoded by the decoding unit 102 equipped with suitable decoding capability, and the resulting images IMG_2 (i.e., raw images having designated resolutions) are generated from the decoding unit 102. The images IMG_2 may include RO images according to the BD-J specification. The buffer controller 104 is used for buffering images IMG_2 into the buffer device (e.g., a memory device) 106.

In this embodiment, the buffer controller 104 includes a checking unit 112 and a control unit 114. The checking unit 112 is arranged to check at least one predetermined criterion and accordingly generate a checking result CR for each checked criterion. The control unit 114 is arranged to refer to the checking result CR for deciding how the images IMG_2 are buffered into the buffer device 106. Other circuitry 108 may include circuit elements required for performing desired functions of the electronic device 100. For example, other circuitry 108 may include a display controller for driving a display apparatus according to RW images buffered in the buffer device 106, and may further include a processor used for processing a portion of an RW image stored in the buffered device 106, and then storing a processing result into the buffered device 106 to overwrite/replace the original portion of the RW image. As the present invention focuses on the buffer management scheme controlled by the buffer controller 104, further description directed to the receiving unit 101, decoding unit 102 and other circuitry 108 is omitted here for brevity.

The control unit 114 may support a plurality of different compression schemes, including a first compression scheme and a second compression scheme. By way of example, but not limitation, the first compression scheme is a lossless compression, and the second compression scheme is a lossy compression. In general, the lossless compression has high quality, and the compression ratio $\left(\text{i.e., } \dfrac{\text{Compressed Data Size}}{\text{Uncompressed Data Size/Original Data Size}}\right)$ is not high (i.e., the value of the compression ratio is large due to small difference between the compressed data size and the uncompressed data size (original data size)) and is not fixed. Compared to the lossless compression, the lossy compression (e.g., wavelet transform or down scaling) has low quality, and the compression ratio is high (i.e., the value of the compression ratio is small due to large difference between the compressed data size and the uncompressed data size (original data size)) and is fixed. The compression ratio of the lossy compression may be determined beforehand based on the desired compression quality, and is fixed during the operation of the lossy compression. Alternatively, the compression ratio of the lossy compression may be set by a fixed value, which forces the compressed data size to fall within a desired range.

In one exemplary embodiment, the RW image stored in the buffer device 106 is either an uncompressed image or a compressed image generated according to the lossy compression, and the RO image stored in the buffer device 106 is either a compressed image generated according to a lossless compression or a compressed image generated according to a lossy compression. In general, at least a portion (i.e., part or all) of a specific RW image may be read from the buffer device 106 for further image processing, and then a processing result of the portion of the specific RW image may be written back to the buffer device 106 to update the portion of the specific RW image. When the lossy compression is employed to compress an original RW image to generate the specific RW image stored into the buffer device 106, the size of the compressed image (i.e., the specific RW image) is fixed and can be known beforehand due to the fixed compression ratio possessed by the lossy compression. Hence, the portion of the specific RW image to be updated in the buffer device 106 can be easily identified, and the operation of updating/replacing the portion of the specific RW image according to the processing result is achieved without complicated computation. Besides, when no compression is applied to the original RW image (i.e., the RW image in the buffer device 106 is an uncompressed image), the operation of updating/replacing at least a portion of the RW image can be easily achieved due to the fact that the size of the original RW image is fixed and can be known beforehand. Regarding the RO images, as there is no image content updating/replacing operation applied to the RO images, storing compressed images as RO images in the buffer device 106 can allow the buffer device 106 to have a smaller buffer size.

More specifically, in a normal mode, the RW images acting as temporarily buffered images are uncompressed images stored in the buffer device 106, and the RO images loaded from files and acting as cached images are compressed images generated according to the first compression scheme (e.g., lossless compression). However, in a special mode, at least a portion (i.e., part or all) of RO images (compressed images) and/or RW images (uncompressed images) is converted into compressed image(s) according to the second compression scheme (e.g., lossy compression) for increasing the amount of free storage space available in the buffer device 106 for buffering incoming RO/RW image data.

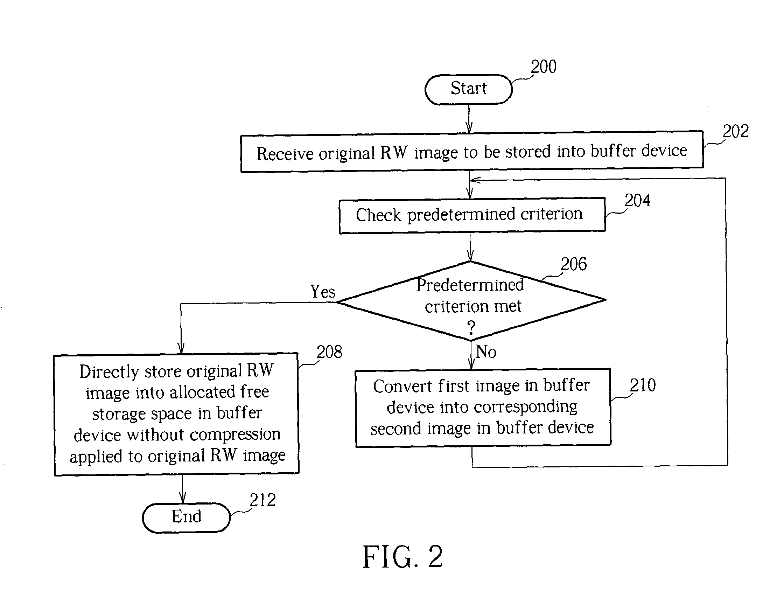

Please refer to FIG. 1 in conjunction with FIG. 2. FIG. 2 is a flowchart illustrating a method for buffering an RW image into a buffer device 106 according to an embodiment of the present invention. Provided that the result is substantially the same, the steps are not required to be executed in the exact order shown in FIG. 2. The exemplary method may be briefly summarized as follows.

Step 200: Start.
Step 202: Receive an original RW image to be stored into the buffer device 106.
Step 204: Check a predetermined criterion and accordingly generate a checking result.
Step 206: Does the checking result indicates that the predetermined criterion is met? If yes, go to step 208; otherwise, go to step 210.
Step 208: Directly store the original RW image into an allocated free storage space in the buffer device 106 without compression applied to the original RW image. Go to step 212.
Step 210: Convert a first image in the buffer device 106 into a corresponding second image in the buffer device 106, wherein a size of the corresponding second image is smaller than a size of the first image. Go to step 204 to check if the predetermined criterion is met.
Step 212: End.

When the control unit 114 receives an original RW image from the buffer device 106 (e.g., an RW image retrieved from the buffer device 106 as the original RW image), the checking unit 112 is operative to check the predetermined criterion (steps 200, 202 and 204). In one exemplary design, the predetermined criterion is met when the checking unit 112 determines that the buffer device 106 has a free storage space not smaller than a full size of the original RW image. When it is determined that the predetermined criterion is met, this implies that the buffer device 106 has enough free storage space. The control unit 114 is thus notified by the checking result CR, and directly stores the original RW image into an allocated free storage space in the buffer device 106 (steps 208 and 212). However, when the checking unit 112 determines that the buffer device 106 fails to have a free storage space equal to or larger than the full size of the original RW image (i.e., the predetermined criterion is not met), the control unit 114 is operative to convert a first image in the buffer device 106 (i.e., one stored image in an image pool) into a corresponding second image in the buffer device 106 (step 210). The first image stored in the buffer device 106 may be an RW image that is an uncompressed image, or an RO image that is a compressed image generated by lossless compression. The second image converted from the first image may be a compressed image generated according to lossy compression. As the lossy compression has a compression ratio (e.g., $\dfrac{\text{Compressed Data Size}}{\text{Uncompressed Data Size/Original Data Size}} = 50\%$) better than a compression ratio (e.g., $\dfrac{\text{Compressed Data Size}}{\text{Uncompressed Data Size/Original Data Size}} = 60\%$) possessed by the lossless compression, the buffer device 106 can release some occupied storage space after the lossless compressed RO image is converted into the lossy compressed RO image. Similarly, as the lossy compression has a compression

ratio (e.g., $\dfrac{\text{Compressed Data Size}}{\text{Uncompressed Data Size/Original Data Size}} = 50\%$) better than a compression ratio (e.g.,

$\dfrac{\text{Compressed Data Size}}{\text{Uncompressed Data Size/Original Data Size}} = 100\%$) possessed by an uncompressed image, the buffer device 106 can release some occupied storage space after the uncompressed RW image is converted into the lossy compressed RW image.

It should be noted that the either of RW image and RO image is related to the BD-J image display. However, the RW image is dynamically created by graphics operation/function, and the image complexity thereof is not predictable. Keeping the RW image uncompressed would prevent the image quality from dropping. Thus, the priority of converting the RO image into a compressed image according to the lossy compression is higher than the priority of converting the RW image into a compressed image according to the lossy compression. In one exemplary design, the stored RW images are not compressed/converted using lossy compression unless all of the stored RO images have been compressed/converted using lossy compression or there is no RO image present in the buffer device 106.

After the lossy compression (e.g., wavelet transform) is enabled to increase the free storage space available in the buffer device 106, the flow proceeds with step 204 to check the predetermined criterion again. If the checking result CR still indicates that the predetermined criterion is not met, an additional first image in the buffer device 106 is converted into corresponding second image in step 210. If the checking result CR indicates that the predetermined criterion is met, implying that the buffer device 106 have enough free storage space for buffering the original RW image, the control unit 114 therefore terminates the lossy compression, and directly stores the original RW image into an allocated free storage space in the buffer device 106 without compression applied to the original RW image (steps 208 and 212).

In above example, the checking unit 112 checks the free storage space of the buffer device 106 to decide whether the predetermined criterion is met. However, this is for illustrative purposes only, and is not meant to be a limitation of the present invention. In an alternative design of the predetermined criterion, the predetermined criterion is met when the checking unit 112 determines that an allocated storage space in the buffer device 106 for the original RW image is not larger than a threshold. In other words, the control unit 114 enables the lossy compression (e.g., wavelet transform) when the checking result CR indicates that the allocated storage space is too large. This also falls within the scope of the present invention.

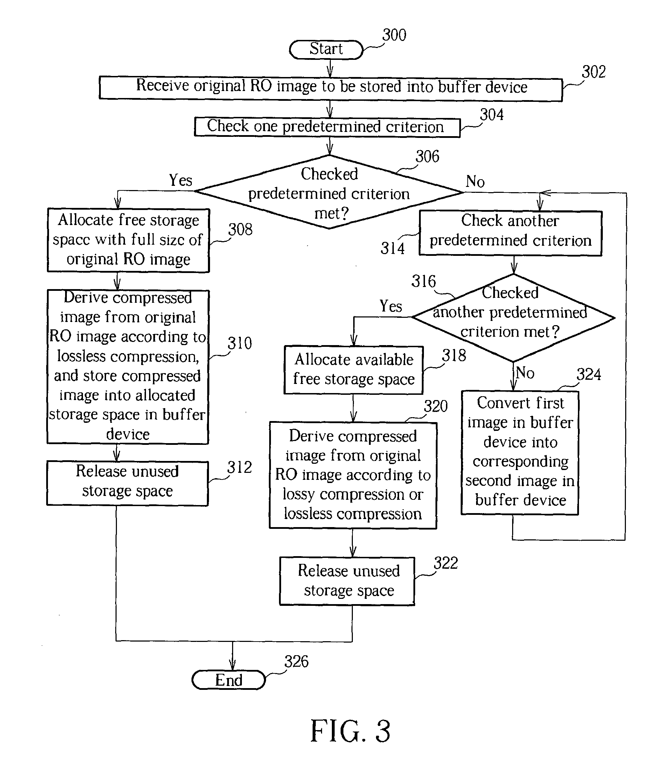

Please refer to FIG. 1 in conjunction with FIG. 3. FIG. 3 is a flowchart illustrating a method for buffering an RO image into a buffer device 106 according to a first embodiment of the present invention. Provided that the result is substantially the same, the steps are not required to be executed in the exact order shown in FIG. 3. The method may be briefly summarized as follows.

Step 300: Start.
Step 302: Receive an original RO image to be stored into the buffer device 106.
Step 304: Check one predetermined criterion and accordingly generate a first checking result.
Step 306: Does the first checking result indicates that the predetermined criterion checked in step 304 is met? If yes, go to step 308; otherwise, go to step 314.
Step 308: Allocate a free storage space with a full size of the original RO image.
Step 310: Derive a compressed image from the original RO image according to a lossless compression, and store the compressed image into the allocated storage space in the buffer device 106.
Step 312: Release unused storage space of the allocated storage space. Go to step 326.
Step 314: Check another predetermined criterion and accordingly generate a second checking result.
Step 316: Does the second checking result indicates that the predetermined criterion checked in step 314 is met? If yes, go to step 318; otherwise, go to step 324.
Step 318: Allocate an available free storage space in the buffer device 106.
Step 320: Derive a compressed image from the original RO image according to one of a lossless compression and a lossy compression, and store the compressed image into the allocated storage space in the buffer device 106.
Step 322: Release unused storage space of the allocated storage space. Go to step 326.
Step 324: Convert a first image in the buffer device 106 into a corresponding second image in the buffer device 106, wherein a size of the corresponding second image is smaller than a size of the first image. Go to step 314 to check the predetermined criterion again.
Step 326: End.

When the control unit 114 receives an original RO image from the preceding decoding unit 102 (e.g., a decoded image generated from the decoding unit 102 as the original RO image), the checking unit 112 is operative to check one predetermined criterion (steps 300, 302 and 304). In one exemplary design, the predetermined criterion is met when the checking unit 112 determines that the buffer device 106 has a free storage space not smaller than a full size of the original RO image. When the buffer device 106 has enough free storage space, this implies that the predetermined criterion checked in step 304 would be met. The control unit 114 is therefore notified by the checking result CR generated by the checking unit 112 in step 304, and therefore allocates a storage space with the full size of the original RO image, stores a compressed image derived from the original RO image into the allocated storage space in the buffer device 106, and releases unused storage space in the allocated storage space (steps 308, 310, and 312), where the compressed image in step 308 is generated according to the first compression scheme (e.g., lossless compression with a compression ratio equal to 60%).

However, when the checking unit 112 determines that the buffer device 106 fails to have a free storage space equal to or larger than the full size of the original RO image, the checking unit 112 is operative to check another predetermined criterion to determine if the buffer device 106 has a free storage space not smaller than a predetermined percentage of the full size of the original RO image. The value of the predetermined percentage is set based on the compression ratio of the second compression scheme (e.g., lossy compression) supported by the control unit 114. For example, the value of the predetermined percentage is set by 50% when the compression ratio of the lossy compression is 50%. When it is determined that the predetermined criterion checked in step 314 is met, the control unit 114 is notified by the checking result CR generated by the checking unit 112 in step 314, and therefore allocates an available storage space (e.g., a free storage space smaller than the full size of the original RO image and equal to/larger than the half size of the original RO image), stores a compressed image derived from the original RO image into the allocated storage space in the buffer device 106, and releases any unused storage space in the allocated storage space (steps 318, 320, and 322), where the compressed image in step 320 may be generated according to either the first compression scheme (e.g., lossless compression) or the second compression scheme (e.g., lossy compression).

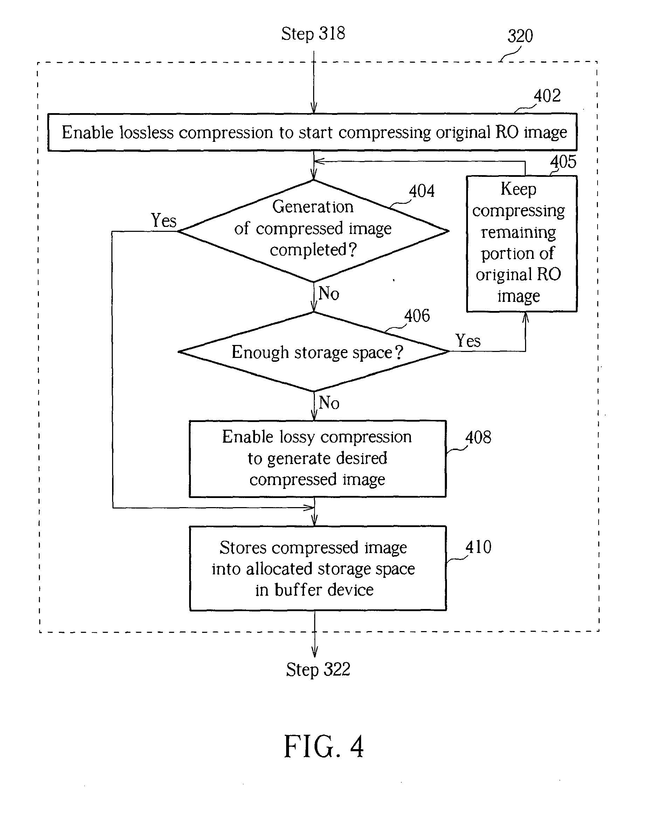

Please refer to FIG. 4, which is a flowchart illustrating a first example of step 320 shown in FIG. 3. In step 402, the control unit 114 first enables the lossless compression to start compressing the original RO image (step 402). Step 404 is executed to check if the generation of the compressed image is completed. In the beginning, the compressed image is not fully generated by the lossless compression yet. Hence, the flow would proceed with the next step 406 to check if the buffer device 106 has enough space for buffering the partial compressed image. If it is determined that the size of the partial compressed image is not larger than the free storage space in the buffer device 106, the lossless compression is allowed to keep/continue compressing the remaining portion of the original RO image (step 405). If the compressed image finally generated by the lossless compression is obtained in step 405, step 404 would determine that the generation of the compressed image is completed, and the flow would proceed with step 410. Otherwise, step 405 will keep performing the lossless compression to generate more compressed RO image data if the current size of the compressed image data does not exceed the free storage space in the buffer device 106 yet. When the generation of the compressed image is completed under the condition where the buffer device 106 has enough free storage space allocated for buffering the compressed image finally generated by the lossless compression (steps 404, 405 and 406), the control unit 114 stores the compressed image (i.e., lossless compressed image) into the allocated storage space in the buffer device 106 (step 410).

However, when the control unit 114 finds that the buffer device 106 fails to have enough free storage space for buffering the partial compressed image generated during the lossless compression (step 406), the control unit 114 disables the lossless compression, and enables the lossy compression to generate the desired compressed image by compressing the original RO image (step 408). After the compressed image is finally generated from the lossy compression, the control unit 114 stores the compressed image (i.e., lossy compressed image) into the allocated storage space in the buffer device 106 (step 410).

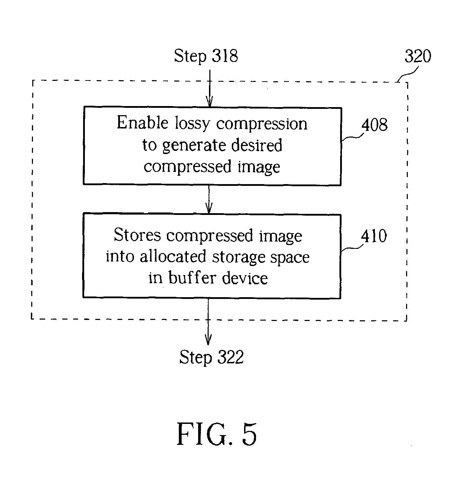

In the example shown in FIG. 4, the control unit 114 first enables the lossless compression with a lower compression ratio for preventing quality of the RO image from dropping, and enables the lossy compression with a higher compression ratio when finding that the buffer device 106 fails to have enough storage space for buffering the lossless compression output. However, this is for illustrative purposes only, and is not meant to be a limitation of the present invention. Please refer to FIG. 5, which is a flowchart illustrating a second example of step 320 shown in FIG. 3. In this alternative design shown in FIG. 5, the aforementioned lossless compression procedure and related storage space checking procedure are omitted. Therefore, the control unit 114 directly enables the lossy compression to generate the desired compressed image even though the buffer device 106 may have enough storage space for buffering a lossless compressed image (step 408). After the compressed image is finally generated from the lossy compression, the control unit 114 stores the compressed image into the allocated storage space in the buffer device 106 (step 410).

Please refer to FIG. 3 again. When the checking unit 112 determines that the buffer device 106 fails to have a free storage space equal to or larger than the predetermined percentage of the full size of the original R0 image (e.g., half size of the original R0 image), implying that the predetermined criterion checked in step 314 is not met, the control unit 114 is operative to convert a first image in the buffer device 106 (i.e., one stored image in an image pool) into a corresponding second image in the buffer device 106 (step 324). The first image stored in the buffer device 106 may be an RW image that is an uncompressed image, or an RO image that is a compressed image generated by lossless compression. The second image converted from the first image may be a compressed image generated according to lossy compression. As the operation of the step 324 is identical to that of the step 210 mentioned above, further description is omitted here for brevity.

In above example, the checking unit 112 checks the free storage space of the buffer device 106 to decide whether the predetermined criterion checked in step 314 is met. However, this is for illustrative purposes only, and is not meant to be a limitation of the present invention. Regarding one alternative design of the predetermined criterion checked in step 314, the predetermined criterion is met when it is estimated that a lossless compression ratio of at least the first image in the buffer device 106 is not lower than a threshold. In other words, the control unit 114 enables the lossy compression (e.g., wavelet transform) when the checking result CR in step 314 indicates that the lossless compression may fail to effectively reduce the size of the original RO image. Regarding another alternative design of the predetermined criterion checked in step 314, the predetermined criterion is met when it is estimated that quality of a compressed image derived from performing a lossy compression upon at least the first image is lower than a threshold. In other words, the control unit 114 enables the lossy compression (e.g., wavelet transform) when the checking result CR in step 314 indicates that the lossy compression may effectively reduce the size of the RO image without significantly degrading the quality of the RO image.

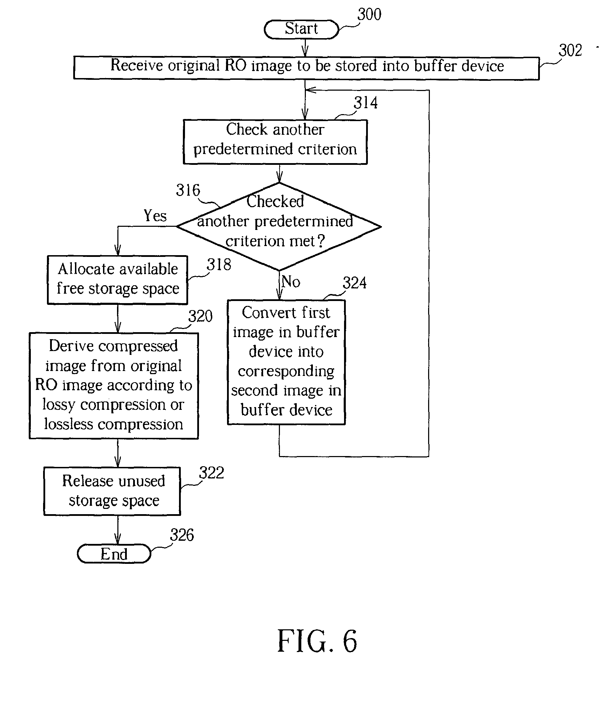

In the example shown in FIG. 3, two predetermined criteria are checked in steps 304 and 314, respectively. However, this is for illustrative purposes only, and is not meant to be a limitation of the present invention. FIG. 6 is a flowchart illustrating a method for buffering an RO image into a buffer device 106 according to a second embodiment of the present invention. In this embodiment, the checking unit 112 directly checks whether the buffer device 106 has a free storage space not smaller than a predetermined percentage of a full size of the original RO image after the control unit 114 receives the original RO image to be buffered into the buffer device 106. The same objective of storing a compressed image, generated by compressing the original RO image using the lossless compression or lossy compression, into the buffer device 106 is achieved.

All combinations and sub-combinations of the above-described features also belong to the invention.

**Claims**

1. A method for buffering an image into a buffer device (106), **characterized by**:

   checking a predetermined criterion;
   when the predetermined criterion is not met, converting at least a first image in the buffer device (106) into at least a corresponding second image in the buffer device (106), wherein a size of the corresponding second image is smaller than a size of the first image; and
   when the predetermined criterion is met, storing a third image derived from the image into the buffer device (106).

2. A buffer controller (104) for buffering an image into a buffer device (106), **characterized by**:

   a checking unit (112), arranged for checking a predetermined criterion; and
   a control unit (114), arranged for converting at least a first image in the buffer device (106) into at least a corresponding second image in the buffer device (106) when the checking unit determines that the predetermined criterion is not met, and storing a third image derived from the image into the buffer device (106) when the checking unit determines that the predetermined criterion is met;
   wherein a size of the corresponding second image is smaller than a size of the first image.

3. The method of claim 1 or the buffer controller (104) of claim 2, **characterized in that** the third image in the buffer device (106) is a readable and writable image.

4. The method of claim 3 or the buffer controller (104) of claim 3, **characterized in that**:

   the predetermined criterion is met when it is determined that the buffer device (106) has a free storage space not smaller than a full size of the image; or
   the predetermined criterion is met when it is determined that an allocated storage space in the buffer device (106) for the image is not larger than a threshold.

5. The method of claim 3 or the buffer controller (104) of claim 3, **characterized in that** the third image is the image directly stored into the buffer device (106) without compression applied thereto.

6. The method of claim 1 or the buffer controller (104) of claim 2, **characterized in that** the third image in the buffer device (106) is a read-only image.

7. The method of claim 6 or the buffer controller (104) of claim 6, **characterized in that**:

   the predetermined criterion is met when it is determined that the buffer device (106) has a free storage space not smaller than a predetermined percentage of a full size of the image; or

the predetermined criterion is met when it is estimated that a lossless compression ratio of at least the first image in the buffer device (106) is not lower than a threshold; or

the predetermined criterion is met when it is estimated that quality of a compressed image derived from performing a lossy compression upon at least the first image is lower than a threshold.

8. The method of claim 6 or the buffer controller (104) of claim 6, **characterized in that** the third image is a compressed image.

9. The method of claim 8 or the buffer controller (104) of claim 8, **characterized in that**:

when the buffer device (106) has enough free storage space for buffering a lossless compression result of performing a lossless compression upon the image, the compressed image is the lossless compression result of the image; or

when the buffer device (106) does not have enough free storage space for buffering the lossless compression result of performing the lossless compression upon the image, the compressed image is generated according to a lossy compression.

10. The method of claim 1 or the buffer controller (104) of claim 2, **characterized in that** the first image is a compressed image generated according to a first compression scheme, and the second image is a compressed image generated according to a second compression scheme different from the first compression scheme.

11. The method of claim 10 or the buffer controller (104) of claim 10, **characterized in that** the first compression scheme is a lossless compression, and the second compression scheme is a lossy compression.

12. The method of claim 10 or the buffer controller (104) of claim 10, **characterized in that** the first image in the buffer device (106) is a read-only image.

13. The method of claim 10 or the buffer controller (104) of claim 10, **characterized in that** the first image is an uncompressed image, and the second image is a compressed image.

14. The method of claim 13 or the buffer controller (104) of claim 13, **characterized in that** the first image in the buffer device (106) is a readable and writable image.

15. The method of claim 1, **characterized in that** the third image in the buffer device (106) is a read-only image, and the method further comprises:

checking another predetermined criterion; and

when the another predetermined criterion is met, storing a fourth image derived from the image into the buffer device (106);

wherein the fourth image is a compressed image generated according to a first compression scheme, and the second image is a compressed image generated according to a second compression scheme different from the first compression scheme.

Electronic device

IMG_1

Receiving
unit                    101

Decoding
unit                    102

IMG_2

Buffer controller        104

Checking
unit                    112

CR

Control unit            114

Other
circuitry               108

Buffer
device                  106

100

FIG. 1

FIG. 2

200 Start

202 Receive original RW image to be stored into buffer device

204 Check predetermined criterion

206 Predetermined criterion met ?

Yes

208 Directly store original RW image into allocated free storage space in buffer device without compression applied to original RW image

No

210 Convert first image in buffer device into corresponding second image in buffer device

212 End

FIG. 3

Step 318                                      320

Enable lossless compression to start compressing original RO image          402

                                                                    405
                                                        Keep
                        Generation            404      compressing
            Yes    of compressed image                 remaining
                       completed?                       portion of
                                                       original RO
                                                          image
                            No

                                              406
                   Enough storage space?              Yes

                            No

                 Enable lossy compression            408
                   to generate desired
                    compressed image

                 Stores compressed image            410
                 into allocated storage space
                    in buffer device

Step 322

FIG. 4

Step 318                                    320

Enable lossy compression
to generate desired                408
compressed image

Stores compressed image
into allocated storage space       410
in buffer device

Step 322

FIG. 5

Start ~300

Receive original RO image to be stored into buffer device ~302

Check another
predetermined criterion ~314

316 ~ Checked
another predetermined
criterion met?

Yes

Allocate available
free storage space ~318

Derive compressed
image from original
RO image according to
lossy compression or
lossless compression ~320

No

Convert first
image in buffer
device into
corresponding
second image in
buffer device ~324

Release unused
storage space ~322

End ~326

FIG. 6

Europäisches
Patentamt

European
Patent Office

Office européen
des brevets

## EUROPEAN SEARCH REPORT

Application Number

EP 13 00 2133

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 395 035 A1 (RICOH KK [JP]) 3 March 2004 (2004-03-03) * paragraphs [0014] - [0017]; figures 6,7 * | 1-15 | INV. H04N7/26 |
| X | US 2009/232480 A1 (JENDBRO MAGNUS [SE]) 17 September 2009 (2009-09-17) * paragraphs [0008] - [0010]; figure 5 * | 1-9 | |
| X | US 2005/071598 A1 (LUICK DAVID A [US]) 31 March 2005 (2005-03-31) * abstract; figure 7 * * paragraphs [0032] - [0034] * | 1-9 | |

TECHNICAL FIELDS
SEARCHED      (IPC)

H04N

The present search report has been drawn up for all claims

| Place of search | Date of completion of the search | Examiner |
|---|---|---|
| Munich | 23 September 2013 | Oelbaum, Tobias |

EPO FORM 1503 03.82 (P04C01)

**ANNEX TO THE EUROPEAN SEARCH REPORT
ON EUROPEAN PATENT APPLICATION NO.**

EP 13 00 2133

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2013

| Patent document cited in search report | | Publication date | Patent family member(s) | | Publication date |
|---|---|---|---|---|---|
| EP 1395035 | A1 | 03-03-2004 | EP | 1395035 A1 | 03-03-2004 |
| | | | JP | 2004080520 A | 11-03-2004 |
| | | | US | 2004105587 A1 | 03-06-2004 |
| US 2009232480 | A1 | 17-09-2009 | US | 2009232480 A1 | 17-09-2009 |
| | | | WO | 2009112896 A2 | 17-09-2009 |
| US 2005071598 | A1 | 31-03-2005 | NONE | | |

EPO FORM P0459

For more details about this annex : see Official Journal of the European Patent Office, No. 12/82